# EUROPÄISCHE PATENTSCHRIFT

(11) **EP 2 547 892 B1**
(45) Veröffentlichungstag und Bekanntmachung des Hinweises auf die Patenterteilung: **21.06.2017**
(21) Anmeldenummer: 11708823.7
(22) Anmeldetag: 14.03.2011
(51) Int. Cl.: F02F 1/42, F01N 13/18

(54) **BRENNKRAFTMASCHINE MIT EINER VERBINDUNGSANORDNUNG FÜR EINEN ZYLINDERKOPF**
INTERNAL COMBUSTION ENGINE COMPRISING A CONNECTING ASSEMBLY FOR A CYLINDER HEAD
MOTEUR À COMBUSTION INTERNE ÉQUIPÉ D'UN SYSTÈME DE RACCORDEMENT POUR UNE CULASSE DE CYLINDRE

(30) Priorität: 24.02.2011 AT 2492011; 18.03.2010 AT 4402010
(43) Veröffentlichungstag der Anmeldung: 23.01.2013
(73) Patentinhaber: AVL List GmbH, 8020 Graz (AT)
(72) Erfinder: OBENAUS, Thomas, A-8072 Fernitz (AT)
(74) Vertreter: Babeluk, Michael
(86) Internationale Anmeldenummer: PCT/EP2011/053797
(87) Internationale Veröffentlichungsnummer: WO 2011/113793

(56) Entgegenhaltungen:
- DE-A1- 10 063 474
- DE-U1-202005 018 602
- FR-A1- 2 574 475
- FR-A1- 2 930 287

## Beschreibung

Die Erfindung betrifft eine Brennkraftmaschine mit einer Verbindungsanordnung für einen Zylinderkopf, mit zumindest einem an zumindest eine Strömungsöffnung des Zylinderkopfes anschließenden luft- oder gasführenden Teil, insbesondere einem Abgaskrümmer oder einem Einlasskrümmer, wobei der luft- oder gasführende Teil zumindest teilweise am Zylinderblock befestigt - vorzugsweise angeschraubt - ist.

Üblicherweise werden Einlass- oder Abgaskrümmer durch Schrauben oder Klemmvorrichtungen am Zylinderkopf befestigt, wobei pro Kanalöffnung bzw. zu befestigendem Bauteil zumindest eine Schraube oder Klemmvorrichtung vorgesehen sind. Diese Schrauben bzw. Klemmvorrichtungen sind vorwiegend in unmittelbarer Nähe zu den Kanalöffnungen angeordnet, um die, meist von der zwischen den beiden zu verbindenden Bauteilen eingebauten Dichtung benötigten, entsprechend hohen Anpresskräfte bei meist limitierter Bauteilsteifigkeit des Einlass- oder Abgaskrümmers erzeugen zu können. Dies schränkt aber die Konstruktionsfreiheiten stark ein, da die Schrauben zum An- und/oder Abbau von Einlass- bzw. Abgaskrümmer zugänglich sein müssen. Durch die nötigen Schraubenfreigänge und den Arbeitsraum zum Ansetzen des Werkzeuges wird der Bauraum zur Platzierung der weiters benötigten Komponenten bzw. die gestalterische Freiheit der anzubauenden Komponenten nachteilig beeinflusst.

Die DE 10 2008 029 020 A1 beschreibt eine Brennkraftmaschine mit einem einen integrierten Abgaskrümmer aufweisenden Zylinderkopf, an dem ein abgasführendes Aggregat mittels einer Klemmflanschvorrichtung montiert ist, wobei die Klemmflanschvorrichtung einen dem Zylinderkopf zugeordneten Zylinderflansch und einen dem Aggregat zugeordneten Aggregat-Flansch aufweist, wobei die Flansche in ihrer Flanschebene gegeneinander gedrückt sind. Um dies zu erreichen, ist mindestens eine in Richtung der Flanschebene montierte, den Zylinderflansch und den Aggregatflansch übergreifende, durch zumindest eine Schräge klemmend auf die beiden Flansche wirkende Spannbrücke vorgesehen. Die Spannbrücke ist über Schrauben direkt mit dem Zylinderkopf verschraubt.

Aus der FR 2 930 287 A1 ist eine Abgasleitung für ein Fahrzeug bekannt, welche einen Krümmer mit einen Eingangs- und einen Ausgangsflansch aufweist. Die Abgasleitung weist Befestigungsmittel zum direkten Befestigen des Ausgangsflansches des Krümmers am Motorblock oder am Zylinderkopf auf. Der Eingangsflansch ist dabei starr am Zylinderkopf befestigt.

Nachteilig ist, dass Gewindebohrungen am Zylinderkopf vorgesehen sein müssen, was einerseits den Herstellungsaufwand erhöht und andererseits die Gestaltungsfreiheit am Wassermantel einschränkt.

Weitere Klemmlösungen für die Befestigung von Abgaskrümmern an Zylinderköpfen sind aus den Veröffentlichungen DE 10 2007 002 825 A1, WO 09/003668 A1, DE 10 2004 010 815 A1, DE 10 2004 037 865 A1, DE 102 51 771 A1, DE 44 30 339 A1, DE 195 10 718 A1, DE 196 53 908 A1, DE 42 05 454 A1 oder DE 23 31 510 A1 bekannt. Bei den meisten dieser Lösungen sind aber Schrauben zur Befestigung vorgesehen und relativ viel Montageraum erforderlich.

Es ist die Aufgabe der Erfindung, diese Nachteile zu vermeiden und eine alternative Befestigungsmöglichkeit für einen an den Zylinderkopf anschließenden luft- oder gasführender Teil zu entwickeln, mit welcher der Montageaufwand verringert und Bauraum eingespart werden kann.

Erfindungsgemäß wird dies dadurch erreicht, dass zwischen dem luft- oder abgasführenden Teil und dem Zylinderkopf zumindest ein Dichtungselement angeordnet ist, wobei zumindest ein Befestigungsmittel für den luft- oder gasführenden Teil räumlich getrennt zum Dichtungselement angeordnet ist, und dass der luft- oder gasführende Teil mit dem Zylinderkopf nur über das zumindest eine Dichtungselement verbunden ist.

Die Befestigungseinrichtung kann auch funktionell getrennt zum Dichtungselement angeordnet sein.

In Folge der Verformung des Dichtungselementes, des Zylinderkopfes und des luft- oder gasführenden Teils sind nur relativ geringe Klemmkräfte nötig.

Der luft- oder gasführende Teil kann dabei beispielsweise durch einen Abgaskrümmer gebildet sein, welcher mit einem Gehäuse eines Abgasturboladers fest verbunden ist oder gemeinsam mit diesem aus einem Teil bestehen kann, wobei Abgaskrümmer und Abgasturbolader gemeinsam am Zylinderblock befestigt sind.

Vorzugsweise ist zwischen dem Zylinderkopf und dem luft- oder gasführenden Teil ein flexibles Dichtungselement angeordnet. Das Dichtungselement kann ein- oder mehrteilig ausgebildet sein und zumindest abschnittsweise als Faltenbalg ausgebildet sein und/oder zumindest abschnittsweise im Anschlussbereich an den Zylinderkopf oder den luft- oder gasführenden Teil im Bereich zumindest einer äußeren Mantelfläche eine Kugelsegmentform oder eine Zylinderform aufweisen. Ist das Dichtungselement mehrteilig ausgeführt, so kann es einen rohrförmigen Faltenbalgteil zwischen Kugelsegmentteilen oder zwischen Ringteilen im Anschlussbereich aufweisen, wobei die drei Teile gasdicht dauerhaft miteinander verbunden, beispielsweise verklebt, verlötet oder verschweißt sind. Jedes Dichtungselement ist an den Anschlussbereichen mit dem Zylinderkopf und/oder dem luft- oder gasführenden Teil verbunden, beispielsweise eingepresst. Die Kugelsegmentform ist so ausgelegt, dass die Dichtfunktion durch die Gaskraft innerhalb des Abgaskrümmers unterstützt wird.

Durch die erfindungsgemäße Verbindungsanordnung kann die Zuverlässigkeit und Dauerhaltbarkeit erhöht und eine strömungsgerechte Gestaltung der gasführenden Kanäle bei geringem Entwicklungsrisiko erzielt werden. Die räumliche und funktionelle Trennung des Dichtungselementes und der Befestigungsmittel ermöglicht eine Befestigung in der Nähe eines vibrationsempfindlichen Turboladers.

Die Erfindung wird im Folgenden anhand der Figuren näher erläutert. Es zeigen:
- Fig. 1: eine erfindungsgemäße Brennkraftmaschine in einer Seitenansicht;
- Fig. 2: diese Brennkraftmaschine in einer stirnseitigen Ansicht;
- Fig. 3: ein Dichtungselement gemäß Detail III in Fig. 2 in einer ersten Ausführungsvariante;
- Fig. 4: ein Dichtungselement gemäß Detail III in Fig. 2 in einer zweiten Ausführungsvariante; und
- Fig. 5: ein Dichtungselement gemäß Detail III in Fig. 2 in einer dritten Ausführungsvariante der Erfindung.

Funktionsgleiche Teile sind in den Ausführungsvarianten mit gleichen Bezugszeichen versehen.

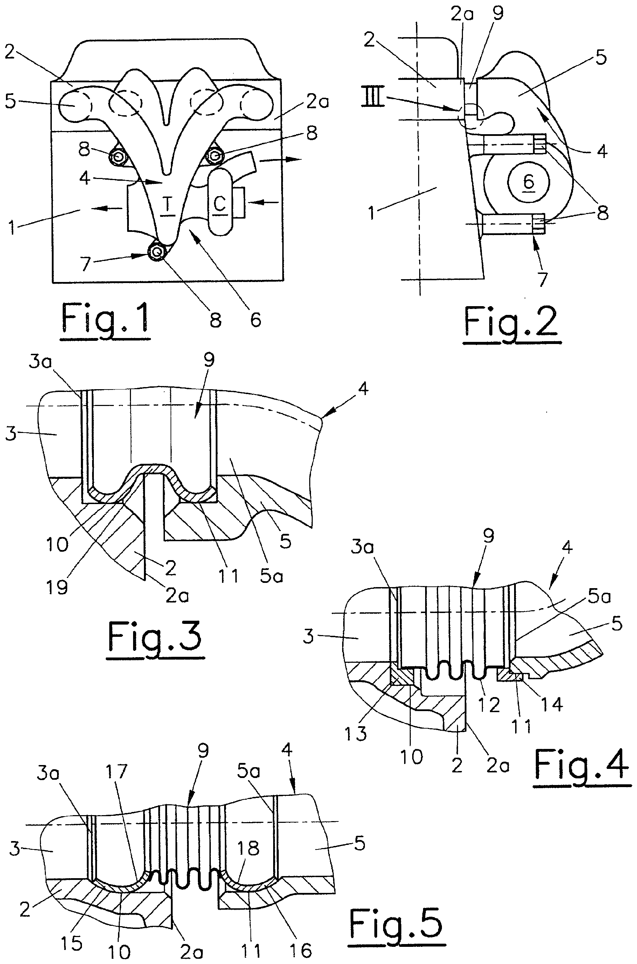

Die Fig. 1 und Fig. 2 zeigen eine Brennkraftmaschine mit einem Zylinderblock 1 und einem Zylinderkopf 2. Der Zylinderkopf 2 weist mehrere in den Figuren 3 bis 5 ersichtliche Gaswechselkanäle 3 auf, die im Bereich einer Längsseite 2a des Zylinderkopfes 2 in Strömungsöffnungen 3a münden bzw. von diesen ausgehen. Die Gaswechselkanäle 3 können Einlasskanäle oder Auslasskanäle sein. Im vorliegenden Ausführungsbeispiel werden die Gaswechselkanäle durch Auslasskanäle gebildet. An die Gaswechselkanäle 3 ist ein luft- oder gasführender Teil 4 angeschlossen, welcher beispielsweise durch einen Sammler, entweder einem Einlasskrümmer oder einem Auslasssammler, oder ein anschließendes Aggregat, zum Beispiel einen Turbolader, gebildet sein kann. Im vorliegenden Beispiel ist der luft- oder gasführende Teil 4 durch einen Abgaskrümmer 5 gebildet, welcher fest mit dem Gehäuse eines Abgasturboladers 6 verbunden oder einstückig mit diesem ausgebildet ist. Mit T ist eine Abgasturbine und mit C ein Lader des Abgasturboladers 6 bezeichnet.

Der Abgaskrümmer 5 ist über Befestigungsmittel 7, beispielsweise Befestigungsschrauben 8, nur am Zylinderblock 1 fixiert. Am Zylinderkopf 2 erfolgt keine Befestigung des Abgaskrümmers 5. Diese Ausführung bedingt, dass der Abgaskrümmer 5 über ein flexibles oder ein flexibel beweglich verbautes starres Dichtungselement 9 mit den Gaswechselkanälen 3 verbunden ist. Ein solch ein flexibel wirkendes Dichtungselement 9 ist in den Fig. 3 bis Fig. 5 in verschiedenen Ausführungen dargestellt. Wesentlich ist, dass das Dichtungselement 9 Relativbewegungen zwischen Zylinderkopf 2 und Abgaskrümmer 5 ausgleichen kann. Das Dichtungselement 9 kann zumindest abschnittsweise die Form eines Kugelsegmentes oder eines Torus aufweisen.

In Fig. 3 ist ein einteiliges Dichtungselement 9 dargestellt, welches an beiden Enden kugelsegmentförmig gestaltete Anschlussbereiche 10, 11 aufweist, zwischen welchen ein Faltenbalg 19 ausgebildet sein kann. Das Dichtungselement 9 wird mittels leichtem Presssitz in die Strömungsöffnung 3a, 5a eingesetzt. Die Kugelsegmentform gestattet es, dass axiale, radiale und winkelige Verschiebungen durch das Dichtungselement 9 aufgenommen werden können.

Die Fig. 4 und Fig. 5 zeigen Dichtungselemente 9, welche aus drei Teilen gasdicht zusammengebaut sind. In Fig. 4 besteht das Dichtungselement 9 dabei aus einem mittleren Faltenbalgteil 12 und zwei Ringteilen 13, 14 in den Anschlussbereichen 10, 11 zum Anschluss des Dichtungselementes 9 an den Zylinderkopf 2 und den Abgaskrümmer 5. Die Ringteile 13, 14 werden dabei einerseits in den Zylinderkopf 2 eingepresst und andererseits auf den Abgaskrümmer 5 dauerhaft und gasdicht aufgepresst. Bei der in Fig. 5 dargestellten Ausführung werden Kugelsegmentteile 15, 16 an den Anschlussbereichen 10, 11 an kugelförmige Bearbeitungsflächen 17, 18 im Zylinderkopf 2 bzw. im Abgaskrümmer 5 angepresst. Die Kugelform ist so ausgelegt, dass die Dichtfunktion durch die Gaskraft innerhalb des Abgaskrümmers 5 unterstützt wird.

Wesentlich ist, dass die Dicht- und die Befestigungsfunktion des Abgaskrümmers 5 voneinander getrennt werden. Der Abgaskrümmer 5 kann somit entfernt vom Dichtungselement 9 zwischen Abgaskrümmer 5 und Zylinderkopf 2 durch zumindest ein Befestigungsmittel 7 befestigt werden, wobei die für die Abgaskrümmerbefestigung erzeugte Schraubenkraft für die Erzeugung der notwendigen Dichtungspressung keine Rolle spielt. Die Dichtungspressung des Dichtungselementes 9 wird alleine durch die Form, Funktion und/oder Größe der Dichtung bzw. des für sie vordefinierten Raumes definiert. Die Dichtung muss alle entsprechenden thermischen und/oder durch Schwingungen hervorgerufene Verformungen und Verschiebungen des Abgaskrümmers 5 aufnehmen und/oder kompensieren können.

Durch die Entkoppelung von Befestigungs- und Dichtfunktion kann das Verhalten des Abgaskrümmers 5 hinsichtlich thermomechanischer Dauerfestigkeit verbessert werden. Es kommt somit zu reduzierter Rissbildung, da die Abgassammelrohre sich in zylinderkopfnähe frei zueinander bewegen können.

Weiters lassen sich die Befestigungsschrauben 8 in Bereiche verlegen, wo sie gut zugänglich sind, ohne die strömungsgünstige Form des Abgaskrümmers 5 zu beeinflussen. Insbesondere kann dabei die Gesamteinheit aus Abgaskrümmer 5 und Abgasturbolader 6 in einem Arbeitsschritt montiert werden. Weiters lassen sich die Befestigungsschrauben 8 in einen Bereich des Schwerpunktes des Abgassystems und/oder des Turboladers legen, um die Anregungen für Schwingungen zu minimieren, ohne dass eventuelle zusätzliche Abstützungen erforderlich wären.

## Patentansprüche

1. Brennkraftmaschine mit einer Verbindungsanordnung für einen Zylinderkopf (2), mit zumindest einem an zumindest eine Strömungsöffnung (3a) des Zylinderkopfes (2) anschließenden luft- oder gasführenden Teil (4), insbesondere einem Abgaskrümmer (5) oder einem Einlasskrümmer, wobei der luft- oder gasführende Teil (4) zumindest teilweise am Zylinderblock (1) befestigt - vorzugsweise angeschraubt - ist, **dadurch gekennzeichnet, dass** zwischen dem luft- oder abgasführenden Teil (4) und dem Zylinderkopf (2) zumindest ein Dichtungselement (9) angeordnet ist, wobei zumindest ein Befestigungsmittel (7) für den luft- oder gasführenden Teil (4) räumlich getrennt zum Dichtungselement (9) angeordnet ist, und dass der luft- oder gasführende Teil (4) mit dem Zylinderkopf (2) nur über das zumindest eine Dichtungselement verbunden ist.

2. Brennkraftmaschine nach Anspruch 1, **dadurch gekennzeichnet, dass** zumindest ein Befestigungsmittel (7) für den luft- oder gasführenden Teil (4) funktionell getrennt zum Dichtungselement (9) angeordnet ist

3. Brennkraftmaschine nach Anspruch 1 oder 2, **dadurch gekennzeichnet, dass** das Dichtungselement (9) flexibel ausgebildet ist und/oder mit dem Zylinderkopf (2) oder den luft- oder gasführenden Teil (4) flexibel verbunden ist.

4. Brennkraftmaschine nach einem der Ansprüche 1 bis 3, **dadurch gekennzeichnet, dass** das Dichtungselement (9) zumindest abschnittsweise als Faltenbalg (19) ausgebildet ist.

5. Brennkraftmaschine nach einem der Ansprüche 1 bis 4, **dadurch gekennzeichnet, dass** das Dichtungselement (9) im Bereich zumindest Anschlussbereiches (10, 11) an den luft- oder gasführenden Teil (4) oder den Zylinderkopf (2) zumindest abschnittsweise im Bereich zumindest einer äußeren Mantelfläche eine Kugelsegmentform oder eine Zylinder- oder Kegelform aufweist.

6. Brennkraftmaschine nach einem der Ansprüche 1 bis 5, **dadurch gekennzeichnet, dass** das Dichtungselement (9) einteilig ausgebildet ist.

7. Brennkraftmaschine nach einem der Ansprüche 1 bis 6, **dadurch gekennzeichnet, dass** das Dichtungselement (9) mehrteilig ausgebildet ist.

8. Brennkraftmaschine nach Anspruch 7, **dadurch gekennzeichnet, dass** zumindest ein Teil des Dichtungselementes (9) durch einen Faltenbalgteil (12) gebildet ist.

9. Brennkraftmaschine nach Anspruch 7 oder 8, **dadurch gekennzeichnet, dass** zumindest ein Teil des Dichtungselementes (9) durch einen Kugelsegmentteil (15, 16) gebildet ist.

10. Brennkraftmaschine nach einem der Ansprüche 7 bis 9, **dadurch gekennzeichnet, dass** zumindest ein Teil des Dichtungselementes (9) durch einen Ringteil (13, 14) gebildet ist.

11. Brennkraftmaschine nach einem der Ansprüche 7 bis 10, **dadurch gekennzeichnet, dass** die einzelnen Teile des Dichtungselementes (9) miteinander gasdicht dauerhaft verbunden sind.

12. Brennkraftmaschine nach einem der Ansprüche 7 bis 11, **dadurch gekennzeichnet, dass** zumindest ein Dichtungselement (9) in eine Strömungsöffnung (3a) des Zylinderkopfes (2) und/oder des luft- oder gasführender Teiles (4) eingepresst ist.

13. Brennkraftmaschine nach einem der Ansprüche 1 bis 12, **dadurch gekennzeichnet, dass** zumindest ein Dichtungselement (9) auf den luft- oder gasführenden Teil (4) aufgepresst ist.

14. Brennkraftmaschine nach einem der Ansprüche 1 bis 13, **dadurch gekennzeichnet, dass** der luft- oder gasführender Teil (4) durch einen Abgaskrümmer (5) gebildet ist, welcher mit einem Gehäuse eines Abgasturboladers (6) fest verbunden oder einstückig mit diesem ausgebildet ist, wobei Abgaskrümmer (5) und Abgasturbolader (6) gemeinsam am Zylinderblock (1) befestigt sind.

## Claims

1. An internal combustion engine having a connecting assembly for a cylinder head (2), comprising at least one air- or gas-conducting part (4) connected to at least one flow opening (3a) of the cylinder head (2), especially an exhaust manifold (5) or an intake manifold, wherein the air- or gas-conducting part (4) is fastened to the cylinder block (1) at least in part, preferably screwed onto said block, **characterised in that** at least one sealing element (9) is disposed between the air- or gas-conducting part (4) and the cylinder head (2), wherein at least one fastening means (7) for the air- or gas-conducting part (4) is disposed spatially separate from the sealing element (9), and that the air- or gas-conducting part (4) is connected only via the at least one sealing element to the cylinder head (2).

2. An internal combustion engine according to claim 1, **characterised in that** at least one fastening means (7) for the air- or gas-conducting part (4) is arranged in a functionally separate manner from the sealing element (9).

3. An internal combustion engine according to claim 1 or 2, **characterised in that** the sealing element (9) is arranged flexibly and/or is flexibly connected to the cylinder head (2) or the air- or gas-conducting part (4).

4. An internal combustion engine according to one of the claims 1 to 3, **characterised in that** the sealing element (9) is arranged at least in sections as a bellows (19).

5. An internal combustion engine according to one of the claims 1 to 4, **characterised in that** the sealing element (9), in the area of at least one connecting region (10, 11) to the air- or gas-conducting part (4) or the cylinder head (2), has the shape of a spherical segment or a cylinder at least in sections in the region of at least one outer jacket surface.

6. An internal combustion engine according to one of the claims 1 to 5, **characterised in that** the sealing element (9) is arranged in an integral manner.

7. An internal combustion engine according to one of the claims 1 to 6, **characterised in that** the sealing element (9) is arranged in several parts.

8. An internal combustion engine according to claim 7, **characterised in that** at least a part of the sealing element (9) is formed by a bellows part (12).

9. An internal combustion engine according to claim 7 or 8, **characterised in that** at least a part of the sealing element (9) is formed by a spherical segment part (15, 16).

10. An internal combustion engine according to one of the claims 7 to 9, **characterised in that** at least a part of the sealing element (9) is formed by an annular part (13, 14).

11. An internal combustion engine according to one of the claims 7 to 10, **characterised in that** the individual parts of the sealing element (9) are permanently connected to each other in a gas-tight manner.

12. An internal combustion engine according to one of the claims 7 to 11, **characterised in that** at least one sealing element (9) is pressed into a flow opening (3a) of the cylinder head (2) and/or the air- or gas-conducting part (4).

13. An internal combustion engine according to one of the claims 1 to 12, **characterised in that** at least one sealing element (9) is pressed onto the air- or gas-conducting part (4).

14. An internal combustion engine according to one of the claims 1 to 13, **characterised in that** the air- or gas-conducting part (4) is formed by an exhaust manifold (5) which is rigidly connected to a housing of an exhaust gas turbocharger (6) or is rigidly connected to or integrally arranged with said turbocharger, wherein the exhaust manifold (5) and the exhaust gas turbocharger (6) are jointly fastened to the cylinder block (1).

## Revendications

1. Moteur à combustion interne comprenant un dispositif de connexion d'une culasse (2) comprenant au moins une partie de guidage de l'air ou des gaz (4) se raccordant à au moins un orifice d'écoulement (3a) de la culasse (2), en particulier un collecteur de gaz d'échappement (5) ou un collecteur d'admission, la partie de guidage de l'air ou des gaz (4) étant au moins en partie fixée de préférence vissée au bloc cylindres (1),
**caractérisé en ce qu'**
entre la partie de guidage de l'air ou des gaz d'échappement (4) et la culasse (2) est monté au moins un élément d'étanchéité (9), au moins un moyen de fixation (7) de la partie de guidage de l'air ou des gaz (4) étant séparé spatialement de l'élément d'étanchéité (9), et la partie de guidage de l'air ou des gaz (4) n'étant connectée à la culasse (2) que par l'intermédiaire de l'élément d'étanchéité.

2. Moteur à combustion interne conforme à la revendication 1,
**caractérisé en ce qu'**
au moins un moyen de fixation (7) de la partie de guidage de l'air ou des gaz (4) est monté en étant fonctionnellement séparé de l'élément d'étanchéité (9).

3. Moteur à combustion interne conforme à la revendication 1 ou 2,
**caractérisé en ce que**
l'élément d'étanchéité (9) est flexible, et/ou est relié de façon flexible à la culasse (2) ou à la partie de guidage de l'air ou des gaz (4).

4. Moteur à combustion interne conforme à l'une des revendications 1 à 3,
**caractérisé en ce que**
l'élément d'étanchéité (9) est réalisé au moins par segments sous la forme d'un soufflet (19).

5. Moteur à combustion interne conforme à l'une des revendications 1 à 4,
**caractérisé en ce que**
l'élément d'étanchéité (9) a, dans la zone d'au moins la zone de connexion (10, 11) avec la partie de guidage de l'air ou des gaz (4) ou la culasse (2), au moins par segments dans la zone d'au moins sa surface enveloppe externe la forme d'un segment de sphère, d'un cylindre ou d'un cône.

6. Moteur à combustion interne conforme à l'une des revendications 1 à 5,
**caractérisé en ce que**
l'élément d'étanchéité (9) est réalisé en une seule pièce.

7. Moteur à combustion interne conforme à l'une des revendications 1 à 6,
**caractérisé en ce que**
l'élément d'étanchéité (9) est réalisé en plusieurs parties.

8. Moteur à combustion interne conforme à la revendication 7,
**caractérisé en ce qu'**
au moins une partie de l'élément d'étanchéité (9) est formée par une partie de soufflet (12).

9. Moteur à combustion interne conforme à la revendication 7 ou 8,
**caractérisé en ce qu'**
au moins une partie de l'élément d'étanchéité (9) est formée par un segment de sphère (15, 16).

10. Moteur à combustion interne conforme à l'une des revendications 7 à 9,
**caractérisé en ce qu'**
au moins une partie de l'élément d'étanchéité (9) est formée par une partie annulaire (13, 14).

11. Moteur à combustion interne conforme à l'une des revendications 7 à 10,
**caractérisé en ce que**
les différentes parties de l'élément d'étanchéité (9) sont reliées en permanence de façon étanche aux gaz.

12. Moteur à combustion interne conforme à l'une des revendications 7 à 11,
**caractérisé en ce qu'**
au moins un élément d'étanchéité (9) est introduit à force dans un orifice d'écoulement (3a) de la culasse (2) et/ou de la partie de guidage de l'air ou des gaz (4).

13. Moteur à combustion interne conforme à l'une des revendications 1 à 12,
**caractérisé en ce qu'**
au moins un élément d'étanchéité (9) est appliqué à force sur la partie de guidage de l'air ou des gaz (4).

14. Moteur à combustion interne conforme à l'une des revendications 1 à 13,
**caractérisé en ce que**
la partie de guidage de l'air ou des gaz (4) est formée par un collecteur de gaz d'échappement (5) qui est relié solidairement avec le boîtier d'un turbocompresseur de gaz d'échappement (6) ou est réalisé en une seule pièce avec celui-ci, le collecteur de gaz d'échappement (5) et le turbocompresseur de gaz d'échappement (6) étant fixés conjointement sur le bloc cylindres (1).
